# EUROPEAN PATENT APPLICATION

(11) **EP 4 459 945 A1**
(43) Date of publication of application: **06.11.2024**
(21) Application number: 23171708.3
(22) Date of filing: 04.05.2023
(51) Int. Cl.: H04L 45/00, H04L 45/302, H04W 40/12

(54) **METHOD OF AND APPARATUS FOR PROCESSING DATA ASSOCIATED WITH A COMMUNICATION SYSTEM**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

Method of processing data associated with a communication system, comprising: determining first information characterizing one or more communication paths to be used by a device for the communication system for transmitting first data based on at least one of: a) a service type associated with the first data, b) a quality of service associated with the first data and/or at least one communication path, c) a functional safety associated with the first data, and, optional, using the first information.

## Description

### Technical Field

The disclosure relates to a method of processing data associated with a communication system.

The disclosure also relates to an apparatus for processing data associated with a communication system.

### Summary

Some embodiments relate to a method, for example a computer-implemented method, of processing data associated with a communication system, comprising: determining first information characterizing one or more communication paths to be used by a device for the communication system for transmitting first data based on at least one of: a) a service type associated with the first data, b) a quality of service associated with the first data and/or at least one communication path, c) a functional safety associated with the first data, and, optional, using the first information, wherein for example at least one of the one or more communication paths at least temporarily comprises a direct path. In some embodiments, this for example enables to perform path switching based on the quality of service associated with the first data.

In some embodiments, the quality of service is associated with at least one of: a) the first data, and/or b) at least one communication path.

In some embodiments, the communication system is based on and/or adheres at least partially to at least one third generation partnership project, 3GPP, radio standard such as 4G (fourth generation), 5G (fifth generation), 6G (sixth generation) or other radio access technology.

In some embodiments, the device for the communication system is a terminal device, e.g., user equipment (UE) or a data transceiver modem, based on and/or adhering at least partially to at least one 3GPP radio standard such as 4G, 5G, 6G or other radio access technology.

In some embodiments, the terminal device is associated with a mobile object such as e.g. a vehicle, for example car or truck or bicycle, for example electric bicycle ("e-bike").

In some embodiments, the direct path may be a device-to-device communication path, e.g. a sidelink communication path, e.g. according to some accepted standard. In some embodiments, the direct path may enable direct device-to-device communication, e.g. between two terminal devices.

Thus, in some embodiments, one communication path of the one or more communication paths may e.g. comprise a direct, e.g., sidelink path, and another communication path of the one or more communication paths may e.g. comprise a network-based path, e.g. to a network device such as e.g. a base station.

In some embodiments, the device for the communication system is a network device, e.g. base station, e.g. gNB based on and/or adhering at least partially to at least one 3GPP radio standard such as 4G, 5G, 6G or other radio access technology.

In some embodiments, exemplary links characterizing the one or more communication paths can e.g. comprise at least one of: a) network interface links, e.g. of the Uu type, b) sidelink, e.g. for direct device communication between terminal devices, e.g. of the PC5 interface type, c) satellite communication link (NTN-type, e.g. using Uu interface).

In some embodiments, the determining of the first information comprises: additionally determining the first information based on at least one of: a) a load associated with the communication system, b) criteria associated with the communication system, c) a network option. In other words, in some embodiments, the first information may be determined based on at least one of: - the service type associated with the first data, - the quality of service associated with the first data, - the functional safety associated with the first data, - the load associated with the communication system, - criteria, e.g. other criteria, associated with the communication system, - a network option.

In some embodiments, the network option may e.g. characterize a set of technical specifications and/or requirements that define a particular configuration or capability of a communication system such as e.g. a mobile network. In some embodiments, the network option may e.g. include at least one of: specific features, protocols, frequency bands, and/or other parameters that may be required for the operation of the network.

In some embodiments, the functional safety may characterize measures and/or techniques to ensure that a system performs reliably, e.g., even in the presence of faults or failures.

In some embodiments, the determining of the first information comprises receiving the first information, for example from at least one further entity.

In some embodiments, the first information may e.g. be determined by a device for the communication system, e.g. an edge computing device, for example a multi-access edge computing, MEC, device, and the first information may be provided by the MEC device to the terminal device, e.g. for use by the terminal device. As an example, in some embodiments, an apparatus for a terminal device and/or the terminal device may perform aspects of the method according to the embodiments, such as, e.g., the step of receiving the first information from the further entity, e.g. MEC device.

In some embodiments, the first information may e.g. be determined by the MEC device, and the first information may be provided by the MEC device to a network device, e.g., gNB, e.g. for use by the gNB, and/or for providing the first information to at least one terminal device, e.g. for use by the at least one terminal device. As an example, in some embodiments, an apparatus for a network device and/or the network device may perform aspects of the method according to the embodiments, such as, e.g., the step of receiving the first information from the further entity, e.g. MEC device.

In some embodiments, determining the first information may be performed by a terminal device, e.g. a UE, e.g. by itself, e.g. for use by the terminal device.

In some embodiments, determining the first information may be performed by a network device, e.g. gNB, e.g. by itself, e.g. for use by the gNB and/or for forwarding the first information to at least one terminal device.

In some embodiments, the method comprises at least one of: a) determining whether path switching associated with the one or more communication paths is to be used, b) determining whether relaying of the first data between the one or more communication paths is to be used, c) determining whether at least one of the path switching and the relaying, for example a combination of the path switching and the relaying, is to be used.

In some embodiments, the determining whether path switching associated with the one or more communication paths is to be used comprises determining whether to use multiple communication paths for transmitting the first data, for example simultaneously or at least partly temporally overlapping or in a temporally non-overlapping fashion, for example sequentially, or, for example, at different, non-adjacent points in time.

In some embodiments, the method comprises at least one of: a) using an explicit indication for signaling that the first information should be used, b) using an implicit indication for signaling that the first information should be used.

In some embodiments, the method comprises using an explicit indication for signaling that the first information should be used

In some embodiments, using an implicit indication for signaling that the first information should be used

In some embodiments, the method comprises both using an explicit indication for signaling that the first information should be used and an implicit indication for signaling that the first information should be used.

In some embodiments, the explicit indication may e.g. be signalled using at least one of: a) (e.g., ISO/OSI) layer 1 signaling, b) (e.g., ISO/OSI) layer 2 signaling, c) (e.g., ISO/OSI) layer 3 signaling, d) signaling associated with at least one other layer, such as e.g. application layer, e.g. ISO/OSI layer 7.

In some embodiments, the implicit indication may e.g. be characterized or defined by, e.g. based on, at least one of: a) a QoS flow, e.g., characterizing a data stream that may be associated with a specific set of QoS parameters, such as data rate, delay, and packet loss, e.g., a 5G QoS indicator (5QI), b) a QoS indicator associated with a PC5 interface, e.g. PQI, c) information characterizing a degree or level of functional safety required for transmission of data.

In some embodiments, at least one device for the communication system may be configured, for example pre-configured, to use the first information, or, for example, not to use the first information.

In some embodiments, the method comprises using the first information for at least one of: a) vehicle-to-network, V2N, communication, b) vehicle-to-everything, V2X, communication, c) non-terrestrial network, NTN,-based communication, d) vehicle-to-network-to-everything, V2N2X, communication, for example using the first information for path switching based on at least one of V2N communication, V2X communication, NTN-based communication, V2N2X communication.

In some embodiments, the method comprises processing an indication associated with the first information, wherein the indication associated with the first information characterizes at least one of the followings elements: a) whether only a first interface or communication path should be used for data transmission, b) whether only a second interface or communication path should be used for data transmission, c) whether more than one interface or communication path should be used for data transmission, wherein a first interface or communication path is preferred, d) whether more than one interface or communication path should be used for data transmission, wherein a second interface or communication path is preferred, e) whether more than one interface or communication path should be used for data transmission, wherein a first interface or communication path and a second interface or communication path are preferred, wherein for example the processing comprises at least one of: A) generating the indication associated with the first information, B) providing the indication associated with the first information, C) instructing, by using the indication associated with the first information, a further entity (e.g., gNB and/or terminal device) to use the first information, D) instructing, by using the indication associated with the first information, a further entity (gNB) to instruct yet another entity (terminal device) to use the first information.

In some embodiments, the first interface may e.g. be at least one of a Uu interface (e.g., terrestrial and/or non-terrestrial) and a PC5 interface.

In some embodiments, the second interface may e.g. be at least one of a Uu interface (e.g., terrestrial and/or non-terrestrial) and a PC5 interface.

In some embodiments, the method comprises mapping between one or more different requirements related to at least one of a) the service type associated with the first data, b) the quality of service associated with the first data and/or at least one communication path, c) the functional safety associated with the first data, for example mapping between a 5G QoS indicator, 5QI, and a QoS indicator associated with a PC5 interface, PQI.

Some embodiments relate to an apparatus configured to perform the method according to the embodiments.

Some embodiments relate to a terminal device, for example user equipment, comprising the apparatus according to the embodiments.

Some embodiments relate to a network device, for example base station, for example gNB, comprising the apparatus according to the embodiments.

Some embodiments relate to a device for a communication system, for example an edge computing device, for example a multi-access edge computing device, comprising the apparatus according to the embodiments.

Some embodiments relate to a communication system comprising at least one apparatus according to the embodiments and/or at least one terminal device according to the embodiments and/or at least one network device according to the embodiments and/or at least one device according to the embodiments.

Some embodiments relate to a vehicle comprising at least one terminal device according to the embodiments and/or at least one apparatus according to the embodiments.

Some embodiments relate to a computer program comprising instructions which, when the program is executed by a computer, cause the computer to carry out the method according to the embodiments.

Some embodiments relate to a computer-readable storage medium comprising instructions which, when executed by a computer, cause the computer to carry out the method according to the embodiments.

Some embodiments relate to a data carrier signal carrying and/or characterizing the computer program according to the embodiments.

Some embodiments relate to a use of the method according to the embodiments and/or of the apparatus of the embodiments and/or of the terminal device of the embodiments and/or of the network device of the embodiments and/or of the device of the embodiments and/or of the communication system of the embodiments and/or of the vehicle of the embodiments and/or of the computer program of the embodiments and/or of the computer-readable storage medium of the embodiments and/or of the data carrier signal of the embodiments for at least one of: a) selecting one or more communication paths for transmitting data, for example the first data, b) considering a service type associated with the data and/or a quality of service associated with the data and/or a functional safety associated with the data and/or a network load and/or other network-relate criteria, c) performing QoS-based and/or service-based path switching, e.g. for V2N2X communication, d) selecting at least one interface or communication path for transmitting data, e.g. one or more data packets, associated with an application, e) considering functional safety requirements for selecting at least one interface or communication path for transmitting data.

### Brief Description of Exemplary Figures

Some exemplary embodiments will now be described with reference to the accompanying drawings, in which:
- Fig. 1: schematically depicts a simplified flow chart according to some embodiments,
- Fig. 2: schematically depicts a simplified block diagram according to some embodiments,
- Fig. 3: schematically depicts a simplified flow-chart according to some embodiments,
- Fig. 4: schematically depicts a simplified flow-chart according to some embodiments,
- Fig. 5: schematically depicts a simplified flow-chart according to some embodiments,
- Fig. 6: schematically depicts a simplified flow-chart according to some embodiments,
- Fig. 7: schematically depicts a simplified block diagram according to some embodiments,
- Fig. 8: schematically depicts a simplified block diagram according to some embodiments,
- Fig. 9: schematically depicts a simplified block diagram according to some embodiments,
- Fig. 10: schematically depicts a simplified block diagram according to some embodiments,
- Fig. 11: schematically depicts a simplified block diagram according to some embodiments,
- Fig. 12: schematically depicts a simplified block diagram according to some embodiments,
- Fig. 13: schematically depicts a simplified block diagram according to some embodiments,
- Fig. 14: schematically depicts aspects of use according to some embodiments.

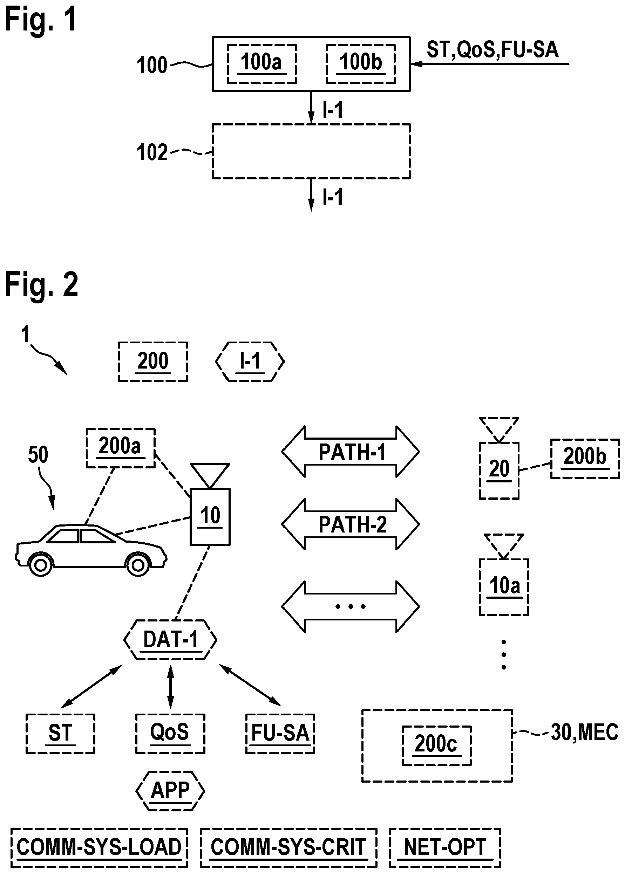

Some embodiments, Fig. 1, 2, relate to a method, for example a computer-implemented method, of processing data associated with a communication system 1 (Fig. 2), comprising: determining 100 (Fig. 1) first information I-1 characterizing one or more communication paths PATH-1, PATH-2, ... (Fig. 2) to be used by a device 10, 20 for the communication system 1 for transmitting first data DAT-1, e.g. to at least one further device 20, 10, 10a for the communication system 1, based on at least one of: a) a service type ST associated with the first data DAT-1, b) a quality of service QoS, associated with the first data DAT-1 and/or at least one communication path, c) a functional safety FU-SA associated with the first data DAT-1, and, optional, using 102 (Fig. 1) the first information 1-1, wherein for example at least one of the one or more communication paths PATH-1, PATH-2, ... at least temporarily comprises a direct path. In some embodiments, this for example enables to perform path switching based on the quality of service QoS associated with the first data DAT-1.

In some embodiments, Fig. 2, the communication system 1 is based on and/or adheres at least partially to at least one third generation partnership project, 3GPP, radio standard such as 4G (fourth generation), 5G (fifth generation), 6G (sixth generation) or other radio access technology.

In some embodiments, Fig. 2, the device for the communication system 1 is a terminal device 10, 10a, e.g., user equipment (UE) or a data transceiver modem, based on and/or adhering at least partially to at least one 3GPP radio standard such as 4G, 5G, 6G or other radio access technology.

In some embodiments, Fig. 2, the terminal device 10, 10a is associated with a mobile object such as e.g. a vehicle 50, for example car or truck or bicycle, for example electric bicycle ("e-bike").

In some embodiments, the device for the communication system is a network device 20, e.g. base station, e.g. gNB based on and/or adhering at least partially to at least one 3GPP radio standard such as 4G, 5G, 6G or other radio access technology.

In some embodiments, the direct path may be a device-to-device communication path, e.g. a sidelink communication path, e.g. according to some accepted standard.

Thus, in some embodiments, Fig. 2, one communication path PATH-1 of the one or more communication paths may e.g. comprise a direct, e.g., sidelink path, and another communication path PATH-2 of the one or more communication paths may e.g. comprise a network-based path, e.g. to a network device 20 such as e.g. a base station.

In some embodiments, Fig. 2, exemplary links characterizing the one or more communication paths PATH-1, PATH-2, ... can e.g. comprise at least one of: a) network interface links, e.g. of the Uu type, b) sidelink, e.g. for direct device communication between terminal devices 10, 10a, e.g. of the PC5 interface type, c) satellite communication link (NTN-type, e.g. using Uu interface).

In some embodiments, Fig. 1, 2, the determining 100 of the first information I-1 comprises: additionally determining 100a the first information I-1 based on at least one of: a) a load COMM-SYS-LOAD associated with the communication system 1, b) criteria COMM-SYS-CRIT associated with the communication system 1, c) a network option NET-OPT. In other words, in some embodiments, the first information I-1 may be determined based on at least one of: - the service type ST associated with the first data DAT-1, - the quality of service QoS associated with the first data DAT-1, - the functional safety FU-SA associated with the first data DAT-1, - the load COMM-SYS-LOAD associated with the communication system 1, - criteria COMM-SYS-CRIT, e.g. other criteria, associated with the communication system 1, - a network option NET-OPT.

In some embodiments, the network option NET-OPT may e.g. characterize a set of technical specifications and/or requirements that define a particular configuration or capability of a communication system such as e.g. a mobile network. In some embodiments, the network option NET-OPT may e.g. include at least one of: specific features, protocols, frequency bands, and/or other parameters that may be required for the operation of the network.

In some embodiments, the functional safety FU-SA may characterize measures and/or techniques to ensure that the a system performs reliably, e.g., even in the presence of faults or failures.

In some embodiments, Fig. 1, 2, the determining 100 of the first information I-1 comprises receiving 100b the first information 1-1, for example from at least one further entity 30.

In some embodiments, Fig. 2, the first information I-1 may e.g. be determined by a device 30 for the communication system 1, e.g. an edge computing device, for example a multi-access edge computing, MEC, device MEC, and the first information I-1 may be provided by the MEC device 30 to the terminal device 10, 10a, e.g. for use by the terminal device 10. As an example, in some embodiments, an apparatus 200, 200a for a terminal device 10, 10a may perform aspects of the method according to the embodiments, such as, e.g., the step of receiving the first information I-1 from the further entity, e.g. MEC device 30.

In some embodiments, Fig. 2, the first information I-1 may e.g. be determined by the MEC device 30, and the first information I-1 may be provided by the MEC device 30 to a network device, e.g., gNB, 20 e.g. for use by the gNB 20, and/or for providing the first information I-1 to at least one terminal device 10, 10a, e.g. for use by the at least one terminal device 10, 10a. As an example, in some embodiments, an apparatus 200, 200b for the network device 200 may perform aspects of the method according to the embodiments, such as, e.g., the step of receiving the first information I-1 from the further entity, e.g. MEC device 30.

In some embodiments, Fig. 2, determining 100 (Fig. 1) the first information I-1 may be performed by a terminal device, e.g. a UE, 10, 10a e.g. by itself, e.g. for use by the terminal device 10, 10a.

In some embodiments, determining 100 (Fig. 1) the first information I-1 may be performed by a network device, e.g. gNB, 20 e.g. by itself, e.g. for use by the gNB 20 and/or for forwarding the first information I-1 to at least one terminal device 10, 10a.

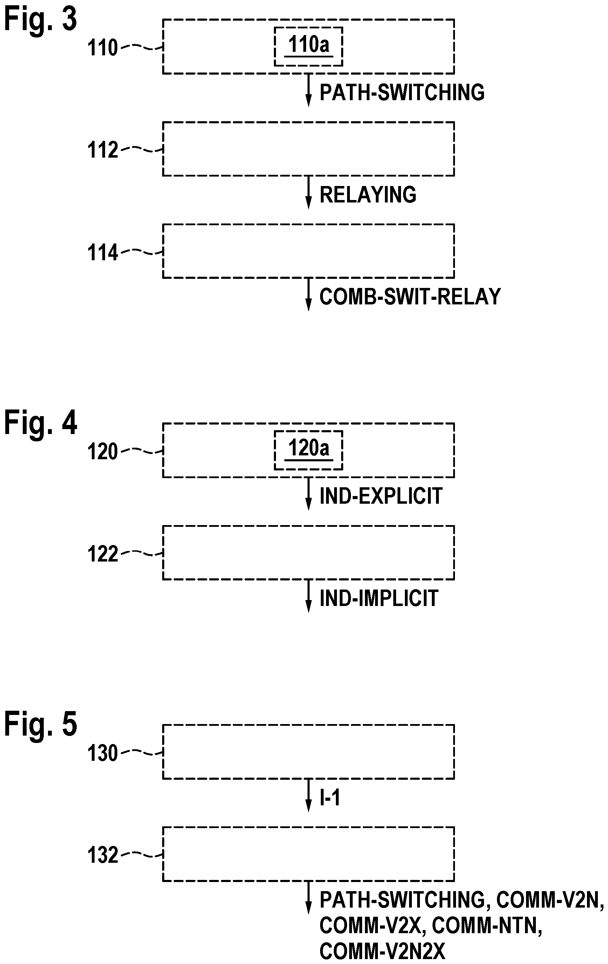

In some embodiments, Fig. 3, the method comprises at least one of: a) determining 110 whether path switching PATH-SWITCHING associated with the one or more communication paths PATH-1, PATH-2, ... (Fig. 2) is to be used, b) determining 112 (Fig. 3) whether relaying RELAYING of the first data DAT-1 between the one or more communication paths PATH-1, PATH-2, ... is to be used, c) determining 114 whether at least one of the path switching PATH-SWITCHING and the relaying, for example a combination COMB-SWIT-RELAY of the path switching and the relaying, is to be used.

In some embodiments, Fig. 3, the determining 110 whether path switching associated with the one or more communication paths is to be used comprises determining 110a whether to use multiple communication paths for transmitting the first data DAT-1, for example simultaneously or at least partly temporally overlapping or in a temporally non-overlapping fashion, for example sequentially, or, for example, at different, non-adjacent points in time.

In some embodiments, Fig. 4, the method comprises at least one of: a) using 120 an explicit indication IND-EXPLICIT for signaling 120a that the first information I-1 should be used, b) using 122 an implicit indication IND-IMPLICIT for signaling that the first information I-1 should be used.

In some embodiments, the explicit indication IND-EXPLICIT may e.g. be signalled using at least one of: a) layer 1 signaling, b) layer 2 signaling, c) layer 3 signaling d) signaling associated with at least one other layer, such as e.g. application layer, e.g. ISO/OSI layer 7.

In some embodiments, the implicit indication IND-IMPLICIT may e.g. be characterized or defined by, e.g. based on, at least one of: a) a QoS flow, e.g., characterizing a data stream that may be associated with a specific set of QoS parameters, such as data rate, delay, and packet loss, e.g., a 5G QoS indicator (5QI), b) a QoS indicator associated with a PC5 interface, e.g. PQI, c) information characterizing a degree or level of functional safety required for transmission of data.

In some embodiments, Fig. 2, at least one device 10, 10a, 20 for the communication system 1 may be configured, for example pre-configured, to use the first information I-1, or, for example, not to use the first information.

In some embodiments, Fig. 5, the method comprises using 130 the first information I-1 for at least one of: a) vehicle-to-network, V2N, communication, b) vehicle-to-everything, V2X, communication, c) non-terrestrial network, NTN,-based communication, d) vehicle-to-network-to-everything, V2N2X, communication, for example using 132 the first information I-1 for path switching based on at least one of V2N communication COMM-V2N, V2X communication COMM-V2X, NTN-based communication COMM-NTN, V2N2X communication COMM-V2N2X.

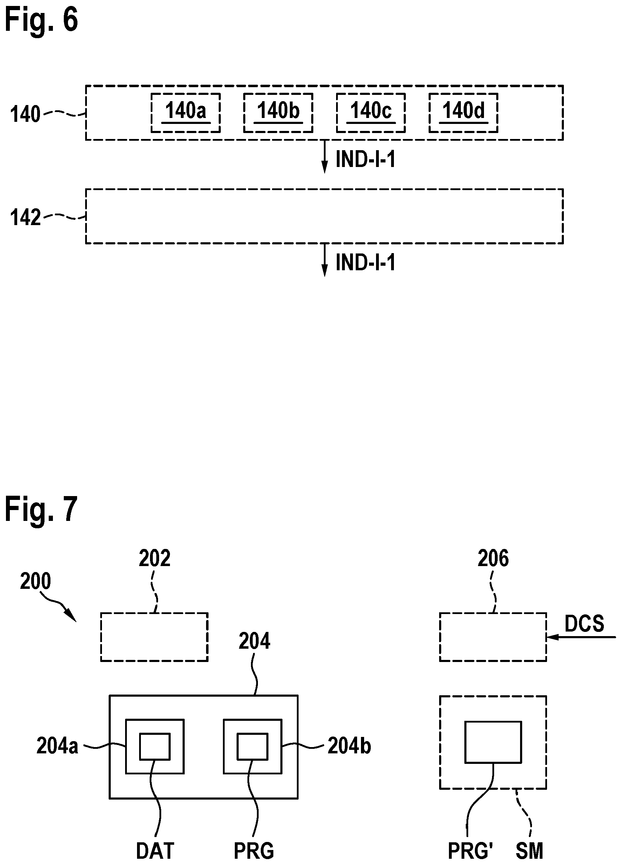

In some embodiments, Fig. 6, the method comprises processing 140 an indication IND-I-1 associated with the first information I-1, wherein the indication IND-I-1 associated with the first information I-1 characterizes at least one of the followings elements: a) whether only a first interface or communication path PATH-1 (Fig. 2) should be used for data transmission, b) whether only a second interface or communication path PATH-2 should be used for data transmission, c) whether more than one interface or communication path should be used for data transmission, wherein a first interface or communication path is preferred, d) whether more than one interface or communication path should be used for data transmission, wherein a second interface or communication path is preferred, e) whether more than one interface or communication path PATH-1, PATH-2, ... should be used for data transmission, wherein a first interface or communication path and a second interface or communication path are preferred, wherein for example the processing comprises at least one of: A) generating 140a the indication associated with the first information, B) providing 140b the indication associated with the first information (e.g. to a further device), C) instructing 140c, by using the indication IND-I-1 associated with the first information I-1, a further entity (e.g., gNB 20 and/or terminal device 10, 10a) to use the first information I-1, D) instructing 140d, by using the indication IND-I-1 associated with the first information I-1, a further entity (e.g., gNB 20) to instruct yet another entity (e.g., terminal device 10, 10a) to use the first information I-1, e.g., for path switching based e.g. on QoS.

In some embodiments, the first interface or communication path may e.g. be at least one of a Uu interface (e.g., terrestrial and/or non-terrestrial) and a PC5 interface.

In some embodiments, the second interface or communication path may e.g. be at least one of a Uu interface (e.g., terrestrial and/or non-terrestrial) and a PC5 interface.

In some embodiments, the method comprises mapping between one or more different requirements related to at least one of a) the service type ST associated with the first data, b) the quality of service QoS associated with the first data and/or at least one communication path, c) the functional safety FU-SA associated with the first data, for example mapping between a 5G QoS indicator, 5QI, and a QoS indicator associated with a PC5 interface, PQI.

Some embodiments, Fig. 2, relate to an apparatus 200, 200a, 200b, 200c configured to perform the method according to the embodiments.

In some embodiments, the apparatus 200a may be associated with, e.g. provided for, e.g. integrated in, a terminal device 10.

In some embodiments, the apparatus 200b may be associated with, e.g. provided for, e.g. integrated in, a network device 20.

In some embodiments, the apparatus 200c may be associated with, e.g. provided for, e.g. integrated in, the MEC device 30.

Some embodiments, Fig. 2, relate to a terminal device 10, for example user equipment, comprising the apparatus 200a according to the embodiments.

Some embodiments, Fig. 2, relate to a network device 20, for example base station, for example gNB, comprising the apparatus 200b according to the embodiments.

Some embodiments, Fig. 2, relate to a device 30 for a communication system 1, for example an edge computing device, for example a multi-access edge computing, MEC, device 30, MEC, comprising the apparatus 200c according to the embodiments.

Some embodiments, Fig. 2, relate to a communication system 1 comprising at least one apparatus 200, 200a, 200b, 200c according to the embodiments and/or at least one terminal device 10, 10a according to the embodiments and/or at least one network device 20 according to the embodiments and/or at least one device 30, MCE according to the embodiments.

Some embodiments, Fig. 2, relate to a vehicle 50 comprising at least one terminal device 10 according to the embodiments and/or at least one apparatus 200a according to the embodiments.

Some details of an apparatus 200 according to the embodiments are explained below with reference to Fig. 7.

In some embodiments, the apparatus 200 may comprises at least one calculating unit, e.g. processor, 202 and at least one memory unit 204 associated with (i.e., usable by) the at least one calculating unit 202 for at least temporarily storing a computer program PRG and/or data DAT, wherein the computer program PRG is e.g. configured to at least temporarily control an operation of the terminal device 10, 10a (Fig. 2) and/or the network device 20 and/or the MEC device 30, e.g. the execution of aspects of a method according to the embodiments.

In some embodiments, Fig. 7, the at least one calculating unit 202 comprises at least one core (not shown) for executing the computer program PRG or at least parts thereof, e.g. for executing the method according to the embodiments or at least one or more steps thereof.

According to further preferred embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further preferred embodiments, the memory unit 204 comprises at least one of the following elements: a volatile memory 204a, particularly a random-access memory (RAM), a non-volatile memory 204b, particularly a Flash-EEPROM.

In some embodiments, the computer program PRG is at least temporarily stored in the non-volatile memory 204b. Data DAT (e.g. associated with the first information I-1 and/or the indication IND-I-1 and the like), which may e.g. be used for executing the method according to the embodiments, may at least temporarily be stored in the RAM 204a.

In some embodiments, an optional computer-readable storage medium SM comprising instructions, e.g. in the form of a further computer program PRG', may be provided, wherein the further computer program PRG', when executed by a computer, i.e. by the calculating unit 202, may cause the computer 202 to carry out the method according to the embodiments. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some embodiments, Fig. 7, the apparatus 200 may comprise an optional data interface 206, e.g. for bidirectional data exchange with an external device (not shown). As an example, by means of the data interface 206, a data carrier signal DCS may be received, e.g. from the external device, for example via a wired or a wireless data transmission medium, e.g. over a (virtual) private computer network and/or a public computer network such as e.g. the Internet, or, for example, via the communication system 1 (Fig. 2).

In some embodiments, Fig. 7, the data carrier signal DCS may represent or carry the computer program PRG, PRG' according to the embodiments, or at least a part thereof.

Some embodiments, Fig. 7, relate to a computer program PRG, PRG' comprising instructions which, when the program is executed by a computer 202, cause the computer 202 to carry out the method according to the embodiments.

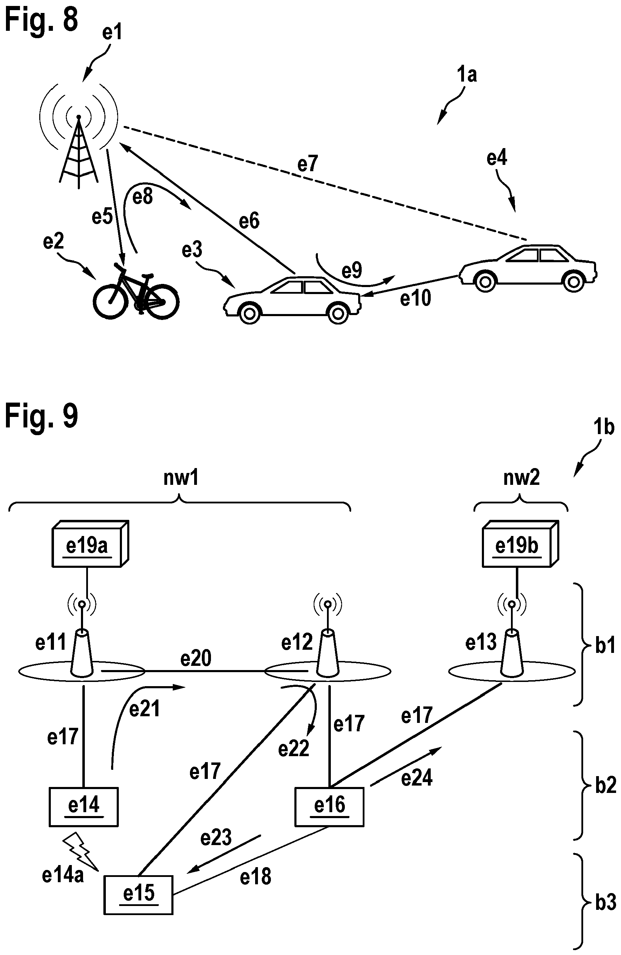

Fig. 8 schematically depicts a simplified block diagram of aspects of a communication system or network 1a according to some embodiments. Element e1 symbolizes a gNB, element e2 symbolizes a first UE which is associated with a bicycle, element e3 symbolizes a second UE associated with a first car, and element e4 symbolizes a third UE associated with a second car. Arrow e5 symbolizes a Uu link between gNB e1 and UE e2, arrow e6 symbolizes a Uu link between gNB e1 and UE e3, and arrow e7 symbolizes a potential, for example not (or not yet) scheduled, Uu link between gNB e1 and UE e4. Arrow e8 symbolizes a vehicle awareness message, VAM, arrow e9 symbolizes a cooperative awareness message, CAM, and element e10 symbolizes a sidelink connection between EU e4 and UE e3.

In the following, exemplary aspects of path switching e.g. based on service and/or QoS and/or needs and/or safety requirements according to some embodiments are provided with reference to Fig. 8. In some embodiments, at least one of the devices e1, e2, e3, e4 may comprise the functionality of the apparatus 200, 200a, 200b, 200c as explained above with reference to Fig. 2.

In some embodiments, the network 1a configures at least one UE (or the at least one UE is pre-configured) , e.g., with two communication paths, e.g., for V2X communication, e.g., following the principle of Multi-Radio Dual connectivity (MR-DC). In some embodiments, each radio interface, i.e., Uu (to the network, see arrows e5, e6, e7) or PC5 (to another UE, see arrow e10) is subject to different scheduler and requirements.

In some embodiments, a UE e2, e3, e4, using the principle according to the embodiments, may switch between the communication paths, e.g., Uu, PC5, e.g., according to QoS and/or safety requirements, which in some embodiments may e.g. be signalled by at least one device or entity of the communication system 1a.

In some embodiments, for example, if the network 1a conveyed a VAM message (or a message translated from VAM) e8, the receiving UE e3 may switch, e.g. perform path switching according to the embodiments, e.g. to broadcast (or multicast) the respective message, e.g. on at least one other interface, e.g., PC5.

In some embodiments, in this case, a V2X message conveying information, e.g., of vulnerable road user, VRU, e2 (e.g., as transmitted in VAM/VAM-like message e8) received from the network may be relayed to PC5. In this case, the UE e3 may switch its interface to PC5 interface. In some embodiments, e.g. based on the QoS of the message e8 and/or the associated safety requirements and/or an implicit instruction/explicit instruction in the message e8, the UE e3 may e.g. simultaneously (or sequentially) transmit the data associated with the message e8 using another radio access technology, RAT, e.g., Uu LTE, Uu NR, Uu LTE-M, PC5 LTE, etc.).

In some embodiments, Fig. 8, a path switching, e.g. by UE e3, may be initiated by higher layer(s)/application, e.g., once a VRU e2 is detected. In some embodiments, data for VRU awareness may be sent, e.g. even if the VRU e2 has not been detected, see, for example, the messages e8 (CAM), e9 (VAM).

In some embodiments, the UE e4 may have no grants for uplink, however, it can inform the UE e3, e.g. via sidelink e10, to convey its data to the VRU e2, via network, see the arrows e6, e5.

In some embodiments, a device, e.g., a VRU, e2 is assumed which is only equipped with Uu interface. In this case, in some embodiments, the network 1a may request (e.g., implicitly or explicitly) at least one further device (e.g., the vehicle UEs e3, e4) to perform path switching, e.g. from Uu interface to PC5 interface, e.g. to convey the message/information extracted from the VRU device e2 to another device in the network capable of, e.g., a PC5 link (sidelink). In some embodiments, e.g., in this case, the requested UE e3, e4 may convey the received message (e.g., over Uu) to other UEs (e.g., over PC5 e10), e.g. using UE-to-Network protocol or only switch the path to the network path (e.g., based on corresponding rules for switching/split, which may e.g. be derived from the first information I-1 (Fig. 1) and/or from a respective indication IND-I-1 (Fig. 6)).

Fig. 9 schematically depicts a simplified block diagram of aspects of a communication system 1b according to some embodiments. Elements e11, e12 symbolize gNBs of a first network nw1, element e13 symbolizes a gNB of a second network nw2. Element e14 symbolizes a UE associated with an VRU, elements e15, e16 symbolize further UE, e.g. associated with vehicles (not shown in Fig. 9). Element e14a symbolizes a possible collision of VRU e14 with UE e15. Elements e17 symbolize respective Uu links, element 18 symbolizes a PC5 link. Element e19a symbolizes a MEC device of the first network nw1 and element 19b symbolizes a MEC device of the second network nw2. Element e20 symbolizes an Xn interface between gNBs e11, e12.

Element e21 symbolizes a VAM message, and elements e22, e23, e24 symbolize CAM messages.

Bracket b1 symbolizes a radio access network, RAN, bracket b2 symbolizes a RAN coverage region, bracket b3 symbolizes an out-of-coverage region. As an example, devices e14, e16 are within the RAN coverage region b2, and device e15 is in the out-of-coverage region b3.

In some embodiments, at least one of the devices e11, e12, e13, e14, e15, e16 may comprise the functionality of the apparatus 200, 200a, 200b, 200c as explained above with reference to Fig. 2.

In some embodiments, the MEC device(s) 19a, 19b may act as information fusion center and/or a translator of message containers, e.g. associated with device to device communication.

In some embodiments, e.g., based on a QoS associated with a message being received from a first interface (e.g., Uu interface e17) and transmitted on the different second interface (e.g., PC5), a UE (e.g., vehicle UE e16) may be configured and/or pre-configured to transmit a V2X message, e.g., CAM message e24, on a third interface (e.g., Uu interface e17) of the other, e.g. second, network nw2, e.g. to gNB e13 of network nw2. In some embodiments, the vehicle UE e17 may be allowed to do multi-connectivity of PC5 and Uu, e.g., with PDCP duplication or, if not allowed, transmit two different PDU sessions sequentially, e.g., transmit PC5, see arrow e23, to proximity UE(s) e15 first then Uu e17 to the second network nw2 (or vice versa).

In some embodiments, the MEC device 19a may extract VAM and/or CAM messages and, for example, provide the first information I-1 based on the VAM and/or CAM messages to at least one further device, e.g. for controlling path switching.

In some embodiments, the MEC devices 19a, 19b may e.g. be used, e.g., as a tool, e.g., to translate between a message conveyed over PC5 interface and Uu interface, and, in some embodiments, may include and/or inherit requesting, e.g., for path switching or activating MR-DC with multiple RAT (e.g., Uu, PC5, NR, LTE, etc.).

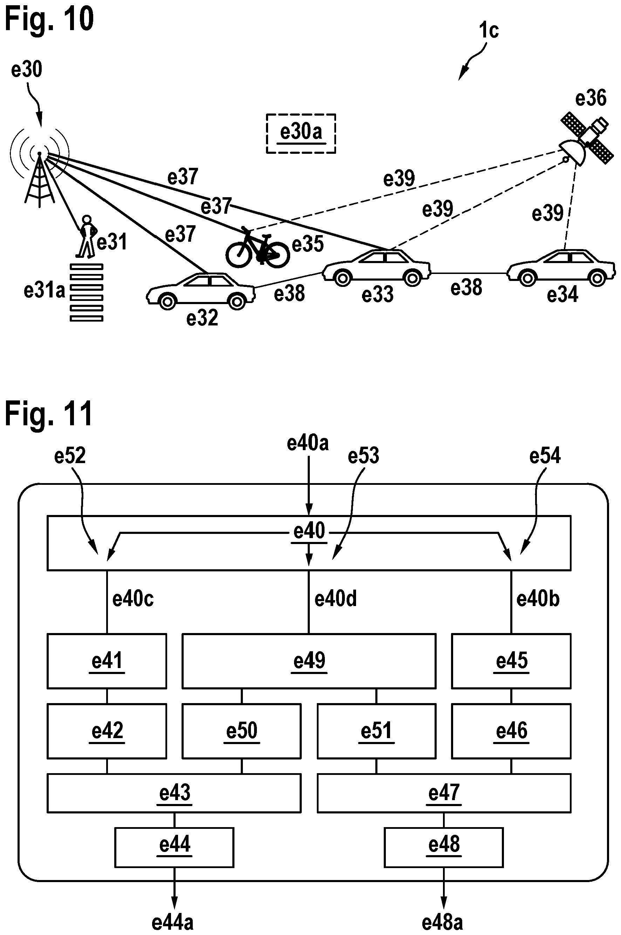

Fig. 10 schematically depicts a simplified block diagram of aspects of a communication system 1c according to some embodiments. Element e30 symbolizes a gNB, element e31 symbolizes a UE associated with a pedestrian, e31a symbolizes a pedestrian crossing, elements e32, e33, e34 symbolize UE associated with vehicles, element e35 symbolizes a UE associated with an e-bike, element e36 symbolizes a non-terrestrial network (NTN) element such as e.g. a gNB associated with a spacecraft or a satellite.

Elements e37 symbolize respective Uu links, elements e38 symbolize sidelinks, e.g., of PC5-type, and elements e39 symbolize links associated with the NTN element e36, e.g. of the NTN-loT (Internet of Things)- or NR (New Radio)-NTN type.

In some embodiments, Fig. 10, the principle according to the embodiments may be used in at least some devices of the communication system 1c, e.g. for QoS-based path switching, e.g., in different coverage scenarios, e.g. involving different communication paths Uu, sidelink, NR-NTN, NTN-loT.

In some embodiments, at least one of the devices e30, e31, e32, e33, e34, e35, e36 may comprise the functionality of the apparatus 200, 200a, 200b, 200c as explained above with reference to Fig. 2.

In some embodiments, in the exemplary configuration of Fig. 10, UEs may be identified for their capabilities, e.g., a VRU (e.g., e-bike e35) or a smart handset with a pedestrian VRU UE, see element e31, may be connected, for example all the time, e.g., with at least one interface at a time. In some embodiment, for example when the terrestrial network "disappears" (e.g., when a UE moves out of radio coverage of the terrestrial network), V2N2X and its possible transmission of services may e.g. be covered or supported, e.g. by devices e36 of a non-terrestrial network. In some embodiments, an NTN e.g. comprising the satellite e36 may easily route a data transmission to an MEC device e30a and/or instruct a receiving UE with network status and/or switching instructions (e.g., implicit or explicit, see, for example, Fig. 4), e.g. based on the first information I-1.

To summarize, in some embodiments, one or more devices of the communication system 1c of Fig. 10 may perform path switching according to the principles of the embodiments, e.g. using one or more available interfaces.

Fig. 11 schematically depicts a simplified block diagram illustrating protocol aspects related to a UE according to some embodiments, wherein a switching or split associated with sidelink (PC5) and Uu interface is considered. In some embodiments, the depicted protocol aspects can be used for path switching, e.g. based on QoS and/or functional safety and/or service types, e.g. of data to be transmitted by the UE.

Element e40 symbolizes a Service Data Adaptation Protocol, SOAP, which, in some embodiments, can be used to map QoS parameters between application and radio layers. Element e41 symbolizes a Packet Data Convergence Protocol (PDCP) associated with the PC5 interface, element e42 symbolizes a Radio Link Control associated with the PC5 interface, element e43 symbolizes a Medium Access Control associated with the PC5 interface, and element e44 symbolizes a Physical Layer associated with the PC5 interface. Similarly, element e45 symbolizes a Packet Data Convergence Protocol (PDCP) associated with the Uu interface, element e46 symbolizes a Radio Link Control associated with the Uu interface, element e47 symbolizes a Medium Access Control associated with the Uu interface, and element e47 symbolizes a Physical Layer associated with the Uu interface.

Element e49 symbolizes a PDCP for split bearer and/or path switching according to some embodiments. Element e50 symbolizes a Radio Link Control associated with the PC5 interface associated with the PDCP e49. Element e51 symbolizes a Radio Link Control associated with the Uu interface associated with the PDCP e49.

Element e52 symbolizes a QoS indicator associated with the PC5 interface, e.g. PQI, element e53 symbolizes aspects of QoS associated with PC5 interface and/or Uu interface, e.g. based on PQI and/or 5QI, and element e54 symbolizes 5QI (5G QoS indicator).

Element e40a symbolizes QoS flows, e.g. associated with or characterizing data to be transmitted by the UE. Element e44a symbolizes a sidelink channel, and element e48a symbolizes a Uu channel.

In some embodiments, a control plane (e.g., associated with Radio Resource Control, RRC, status and configuration) may come from one core network and may be carried on a Uu communication path. However, in some embodiments, some (or all) RRC configuration can be forwarded to a destination UE (e.g., currently not connected to a network) via a PC5 communication path. In some embodiments, the RRC configuration may e.g. comprise the first information I-1 according to the embodiments, and/or information derived therefrom. In some embodiments, the RRC configuration may e.g. comprise the indication IND-I-1, see Fig. 6.

In some embodiments, e.g. regarding aspects of a user plane, if a UE supports flexible switching between sidelink bearer (e.g., using PC5 interface) and network bearer (e.g., using Uu interface), the UE may decide, e.g. directly before transmitting data, either to go over sidelink bearer (e.g., transmit the data over the sidelink, e.g. PC5 interface) or over the network bearer (e.g., transmit the data over the Uu interface) or both (e.g., duplicating the data and/or sending different segments of PDUs associated with the data on one or more of the different bearers (Uu, PC5)).

In some embodiments, the UE may have another, e.g. additional, Split/Switch bearer. In some embodiments, e.g. in this case, configured QoS flows can be mapped between PQI and 5QI.

In some embodiments, e.g. regarding aspects of a radio protocol architecture, data may be received from higher layers with a specific QoS Flow considering, e.g., a 1:1 mapping between the data and the QoS flow. In some embodiments, the QoS flow indicates (e.g., as detailed in the following) whether the data and its associated flow should be routed over PC5 only, or should be routed over Uu only, or subject to dynamic switching (e.g., based on at least one of the PQI value, the 5QI value, a mapping/indication for which path to select, as may e.g. be characterized by the indication IND-I-1 according to some embodiments, see, for example, Fig. 6).

In some embodiments, if the data to be transmitted has a QoS flow which is PQI <> 5QI (i.e., allow switching) the data may be dedicated to the split/switch bearer. Yet, in some embodiments, e.g. based on at least one of: an exact value of PQI<>5QI, a further indication, a required functional safety, an availability of both link, a quality/reliability/latency of both links, the PDCP of a split/switching bearer may e.g. select either one (e.g. Uu or PC5) or both bearers, e.g. Uu and PC5.

In some embodiments, Fig. 11, e.g. based on a QoS flow received, see arrow e40a, the SOAP e40 maps data to a single bearer, e.g., Uu (network) bearer e40b or sidelink (PC5) bearer e40c, or to the split/switch bearer e40d.

E.g., in some embodiments, if a QoS flow e40a indicates a low priority and/or less stringent requirements (i.e., high latency, low reliability, etc.) data is sent to PC5 only. In some embodiments, e.g., if data's QoS flow indicates, for example unique, network requirements (e.g., 5QI associated to a network service) or indicating a network mandation, therefore, the SOAP e40 routes the data to Uu only.

In some embodiments, Fig. 11, e.g., if a UE receives data to be transmitted (e.g., the first data DAT-1) with an indication, e.g. a "split indication" (see Fig. 11 and the following table 1 for more details) at least one of the following aspects may be used:
In some embodiments, the UE may evaluate the PQI, 5QI values (e.g., determining the first information I-1 based on the PQI, 5QI values) and consider a link quality of the two links associated to the split bearer (hence, e.g. selecting the appropriate one).

In some embodiments, the UE may receive an indication, e.g. indicating a preference of selection (for example the indication IND-I-1 associated with the first information I-1, see Fig. 6), and the UE's SOAP e40 (Fig. 11) may send the data to the split bearer with a preferred selection of one link (i.e., either PC5 or Uu), e.g. based on the indication.

In some embodiments, the UE may receive an indication indicating to provide best effort performance. In this case, in some embodiments, it is up to the links' quality and availability, and the UE may e.g. send the data on one link only, or on both links, e.g. simultaneously and/or at least partly temporally overlapping or sequentially, i.e. using one link after the other for transmitting the data over both links.

In some embodiments, e.g. for high functional safety, a network may be selected if the time sensitive requirements and/or reliability can be satisfied.

In some embodiments, e.g. for high functional safety, a PC5 path may be selected, e.g. if the time sensitive requirements and/or reliability and/or link availability can be achieved with the PC5 path.

In some embodiments, e.g. for another level of high functional safety, both PC5 and network (Uu) paths can be selected, e.g. simultaneously, e.g. when best effort is indicated.

In the following aspects related to an impact on a V2X layer and V2X (PC5/Uu) QoS Indication according to some embodiments are disclosed.

In some embodiments, an impact on V2X layer as e.g. defined by 3GPP TS 23.287 may include Uu communication as well as legacy V2X PC5 communication, e.g. in a same layer.

In some embodiments, this means that data associated to V2X services (e.g., ITS (Intelligent Transportation System) services) should consider differentiating in a higher layer (e.g., NAS (Non-Access Stratum) (network or core network), application, facility layer, multi-channel operation layer in ITS protocol stack) the transmission over Uu or PC5 or both, e.g. if a requirement is initiated (e.g., indicated), e.g. by a higher layer (e.g., either based on an application or being specified in the higher layer, e.g., ITS, protocol stack).

In some embodiments, e.g. in case a higher layer protocol stack will indicate a preferred interface, i.e., Uu or PC5, or both, the higher layer may, e.g. shall, indicate at least one of the following:
- the higher layer should indicate to lower layer whether Uu is preferred or mandated,
- the higher layer should indicate to lower layer whether PC5 is preferred or mandated,
- the higher layer should indicate to lower layer whether PC5 and Uu can be freely selected by lower layers.

In some embodiments, e.g. in case a higher layer protocol stack has no preference or preferring an interface is beyond the said layer's capability, the higher layer may indicate (e.g., if at all) the following:
- the higher layer should indicate to lower layer whether PC5 and Uu can be freely selected by lower layers, or
- Nothing

In some embodiments, in in 3GPP TS 23.287 (see, for example Rel.-18.0.0), a V2X layer may be impacted by the considered switching between the two access stratum (AS) interfaces and their associated layers (i.e., Uu in addition to the legacy PC5) according to some embodiments.

In the following, exemplary additions and/or modifications to passages of 3GPP TS 23.287, which consider aspects of the embodiments, are provided. These exemplary additions and/or modifications are merely exemplary for illustrating an application of the principle according to the embodiments to an accepted standard, and they are not considered to limit the scope of the disclosure.

*** start of proposed additions and/or modifications according to some embodiments ***

"V2X communication over NR based Uu interface and PC5 reference points supports for Uu unicast and multicast and/or broadcast (MBS) and for PC5 broadcast mode, groupcast mode, and unicast mode at AS layer.

If V2X application layer of the UE indicates the mode of communication to V2X layer, and indicates the preferred interface to Uu and/or PC5 and/or both, the V2X layer shall set the interface and the associated QoS flow to the required and/or preferred interface, namely 5QI [as in TS 23.501] for Uu interface point and PQI for PC5 or a composite/combined PQI<>5QI for lower layer to select the appropriate interface.

If V2X application layer of the UE indicates the mode of communication to V2X layer with or without the above interface switching/selection, the V2X layer shall set the mode of communication based on the request of the V2X application layer; otherwise, the V2X layer sets the mode of communication based on the mapping information for a V2X service type defined in clause 5.1.2.1. The V2X layer indicates the mode of communication for the V2X service type to the AS layer, namely Uu or PC5, leaving it o the AS to select on or both interfaces, i.e., Uu and/or PC5. Signalling over control plane over PC5 reference point for unicast mode communication management is supported. Signalling over control plane over Uu reference point for unicast mode, multicast, broadcast communication management is supported."

*** end of proposed additions and/or modifications according to some embodiments ***

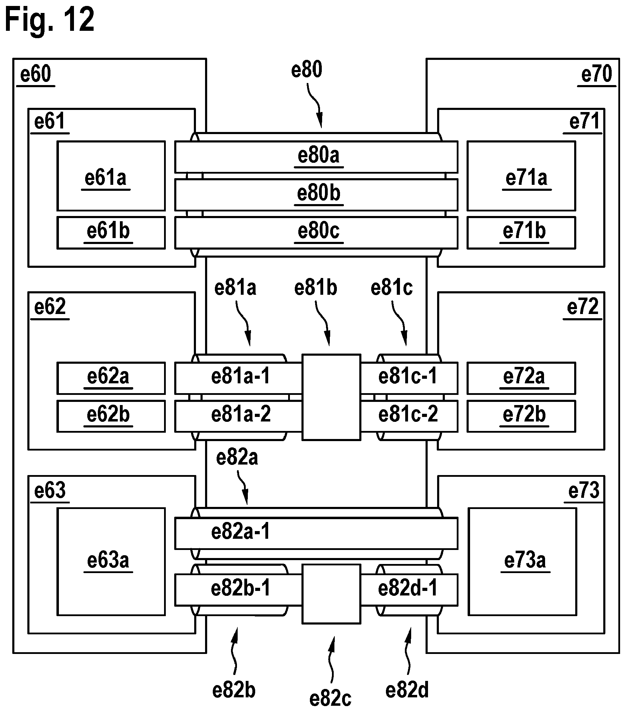

Fig. 12 schematically depicts a simplified block diagram according to some embodiments, which, in some embodiments, can be considered to enhance Fig. 5.2.1.4-1 of 3GPP TS 23.287 by aspects of the principle according to the embodiments.

Element e60 symbolizes a first UE, e.g., "UE A", element e70 symbolizes a second UE, e.g., "UE B", element e61 symbolizes an "Application Layer ID 1", element e71 symbolizes an "Application Layer ID 2", element e62 symbolizes an "Application Layer ID 3", element e72 symbolizes an "Application Layer ID 4", element e63 symbolizes an "Application Layer ID 5", element e73 also symbolizes the "Application Layer ID 5".

Element e61a symbolizes a "V2X Service A", element e61b symbolizes a "V2X Service B", both associated with the first UE e60, e71a symbolizes a "V2X Service A", element e71b symbolizes a "V2X Service B", both associated with the second UE e70.

Element e80 symbolizes a "PC5 unicast link 1", being associated with three PC5 QoS Flows, i.e. "PC5 QoS Flows #1" e80a, "PC5 QoS Flows #2" e80b, "PC5 QoS Flows #3" e80c.

Element e62a symbolizes a "V2X Service C", element e62b symbolizes a "V2X Service D", both associated with the first UE e60, e72a symbolizes a "V2X Service C", element e72b symbolizes a "V2X Service D", both associated with the second UE e70.

Element e81a symbolizes a "Uu unicast (or MBS (Multicast Broadcast Services) for DL (downlink)) link 2", element e81b symbolizes an NG-RAN (Next Generation Radio Access Network) or a gNB, element e81c symbolizes the "Uu unicast link 2". Element e81a-1 symbolizes a "5QI (Uu) Flow #4), element e81a-2 symbolizes a "5QI (Uu) Flow #5". Similarly, e81c-1 symbolizes the "5QI (Uu) Flow #4), element e81c-2 symbolizes the "5QI (Uu) Flow #5".

Element e63a symbolizes a "V2X Service E" associated with the first UE e60, and element e73a symbolizes the "V2X Service E" associated with the second UE e70.

Element e82a symbolizes a "PC5 unicast link 3" being associated with a "PC5 QoS Flow #6" e82a-1. Elements e82b, e82d symbolize a "Uu unicast (or MBS for DL) link 4", and element e82c symbolizes an NG-RAN or a gNB. Element e82b-1, e82d-1 symbolize a "5QI (Uu) Flow #7".

As can be seen, in contrast to the conventional approach and, for example, the conventional Fig. 5.2.1.4-1 of 3GPP TS 23.287, Fig. 12 exemplarily depicts PC5 unicast Links and Uu unicast (and/or MBS) for splitting/switching services, e.g. based on the principle according to the embodiments. As an example, in some embodiments, for the V2X Service E e63a, e73a, QoS-based path switching, e.g. between the links or paths e82a, e82b, e82c, e82d may be performed, e.g. in accordance with at least some embodiments as explained above.

In the following, exemplary aspects of QoS handling, e.g. for V2X communication, according to some embodiments are disclosed.

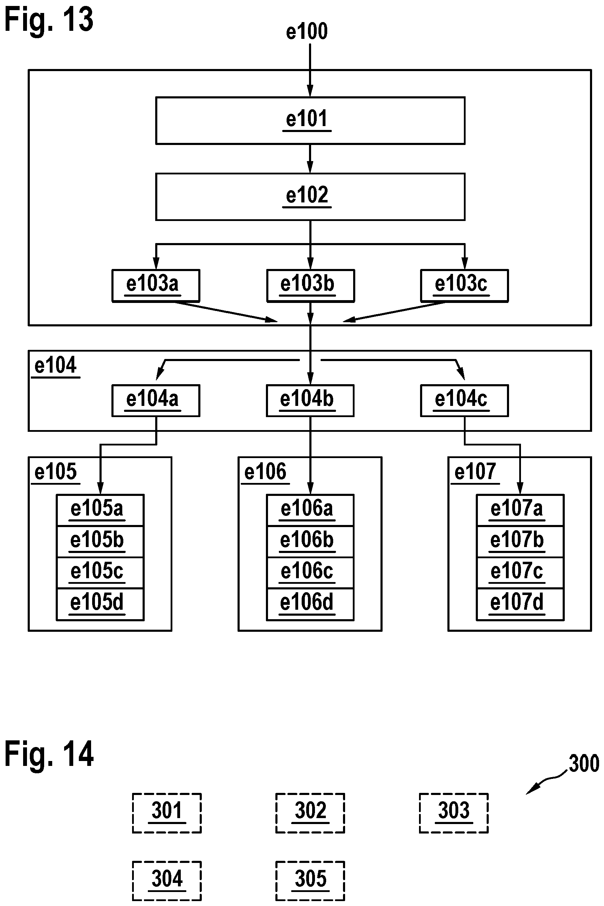

In some embodiments, Fig. 13, a V2X packet e100 is sent from a V2X application/service. The packet e100 (e.g., from a V2X service, see Figure 13 for more details) is e.g. sent from higher layers and conveyed to the V2X layer e101. The V2X layer e101 (or a lower sub-layer following it) may perform indication and/or selection e102 for a PC5/Uu switching/split preference.

In some embodiments, e.g. if higher layers (e.g., ITS layers and/or a facility layer) indicates the preference, then the V2X layer e102 may use the indication to select and/or switch and/or multiplex the interface points (e.g., Uu and/or PC5).

In some embodiments, e.g., if the higher layer(s) didn't indicate the preference, the V2X layer e101 may, e.g. shall, consider the requirements from the service and/or application or leave it to lower layers / sublayers.

Returning to Fig. 13, element e103a symbolizes QoS rules associated with a PC5 interface, element e103b symbolizes split/switch bearer rules, e.g. QoS rules, and element e103c symbolizes QoS rules associated with a Uu interface.

In some embodiments, the QoS rules may, e.g. shall, select either a PQI, a 5QI or a PQI<>5QI, e.g. a mapping between the PQI and the 5QI, where an indication may be as follows:

**Table 1: Possible indication from higher layers to enable selection, split and switching between the interfaces/communication paths.**

| Split/switch indication QoS Rule | QoS indication (in order pair set(s)) |
|---|---|
| Uu only interface | QoS Indication = [5QI] |
| PC5 only interface | QoS Indication = [PQI] |
| PC5 preferred interface | QoS Indication = [PQI, 5QI] |
| Uu preferred interface | QoS Indication = [5QI, PQI] |
| PC5 + Uu preferred interfaces | QoS Indication (two independent sets) = [5QI] and [PQI]* |

In other words, in some embodiments, an indication, e.g. from higher layers, e.g. to enable at least one of a) selection, and/or b) split, and/or c) switching between the interfaces/communication paths may be formed by and/or based on, e.g. only, using 5QI, e.g. as a QoS indication.

In some embodiments, an indication, e.g. from higher layers, e.g. to enable at least one of a) selection, and/or b) split, and/or c) switching between the interfaces/communication paths may be formed by and/or based on, e.g. only, using PQI, e.g. as a QoS indication.

In some embodiments, an indication, e.g. from higher layers, e.g. to enable at least one of a) selection, and/or b) split, and/or c) switching between the interfaces/communication paths may be formed by and/or based on using both PQI and 5QI as a QoS indication, e.g. by combining PQI and 5QI or by concatenating PQI and 5QI, e.g. in the form of an ordered list or 2-tuple, e.g. [5QI, PQI] or [PQI, 5QI].

In some embodiments, an indication, e.g. from higher layers, e.g. to enable at least one of a) selection, and/or b) split, and/or c) switching between the interfaces/communication paths may be formed by and/or based on using both PQI and 5QI, e.g. as two independent sets.

In some embodiments, a mapping between 5QI and PQI or vice versa may be provided, e.g. relating to at least one value associated with 5QI and/or PQI, e.g. a value characterizing a latency.

In other words, in some embodiments, at least one value of first QoS related information such as e.g. 5QI may be mapped to at least one value, e.g. a corresponding value, of second QoS related information such as e.g. PQI. In some embodiments, said at least one value may e.g. characterize latency.

In some embodiments, a UE 10 or an apparatus 200a for the UE 10 may perform the mapping. As an example, in some embodiments, the UE 10 may receive a 5QI requirement, but the UE has (e.g., at least currently) no Uu interface (e.g., active Uu interface), so that the UE can e.g. perform mapping the received 5QI requirement from 5QI to a, for example corresponding, PQI requirement.

In some embodiments, e.g. in case of both PC5 + Uu are preferred interfaces, this may mean that the lower layer should multiplex (or split or duplicate) data on both interfaces. In this, and as indicated with two sets (namely [5QI] and [PQI]), the UE may, e.g. shall, use the associated fields on the relevant interface.

In some embodiments, an indication, e.g. from at least one higher layer, e.g. to a UE, may comprise at least one of the following:
a) an information to only use a Uu interface, and/or
b) an information to only use a PC5 interface, and/or
c) an information to use a PC5 interface as a preferred interface, and to optionally use at least one further, e.g. other, e.g. Uu, interface,
d) an information to use a Uu interface as a preferred interface, and to optionally use at least one further, e.g. other, e.g. PC5, interface,
e) an information to use both a PC5 interface and a Uu interface as preferred interfaces.

Thus, in some embodiments, the method comprises signaling, e.g. from a first device and/or higher layer, at least one of the information items a) to e) of the preceding paragraph.

Thus, in some embodiments, the method comprises receiving signaling, e.g. from a first device and/or higher layer, indicating and/or characterizing at least one of the information items a) to e) of the preceding paragraph.

In some embodiments, an impact of applying the principle according to the embodiments to a per-flow PC5 and Uu QoS Model for NR V2N2X (see, for example, Figure 5.4.1.1.1-1 of TS 23.287) is illustrated by Fig. 13, which can, in some embodiments, be considered as an enhanced per-flow QoS Model, based on the principle according to the embodiments.

In this regard, element e104 symbolizes an optional common SOAP, element e104a symbolizes a PC5 SOAP, element e104b symbolizes QoS rules associated with PC5 interface and/or Uu interface, and element e104c symbolizes QoS rules associated with Uu interface.

Element e105 symbolizes a sidelink (SL) radio bearer, comprising a stack of PDCP e105a, RLC e105b, MAC e105c, PHY e105d. Similarly, element e106 symbolizes a Uu + SL switched or split radio bearer according to some embodiments, comprising a stack of PDCP e106a, RLC e106b, MAC e106c, PHY e106d. Similarly, element e107 symbolizes a Uu radio bearer according to some embodiments, comprising a stack of PDCP e107a, RLC e107b, MAC e107c, PHY e107d.

Some embodiments, Fig. 14, relate to a use of the method according to the embodiments and/or of the apparatus 200, 200a, 200b, 200c of the embodiments and/or of the terminal device 10, 10a of the embodiments and/or of the network device 20 of the embodiments and/or of the device 30 of the embodiments and/or of the communication system 1, 1a, 1b, 1c of the embodiments and/or of the vehicle 50 of the embodiments and/or of the computer program PRG, PRG' of the embodiments and/or of the computer-readable storage medium SM of the embodiments and/or of the data carrier signal DCS of the embodiments for at least one of: a) selecting 301 one or more communication paths (e.g., but not exclusively, Uu and/or PC5) for transmitting data, for example the first data DAT-1, b) considering 302 a service type associated with the data and/or a quality of service associated with the data and/or a functional safety associated with the data and/or a network load and/or other network-relate criteria, c) performing 303 QoS-based and/or service-based path switching, e.g. for V2N2X communication, d) selecting 304 at least one interface or communication path for transmitting data, e.g. one or more data packets, associated with an application, e) considering 305 functional safety requirements for selecting at least one interface or communication path for transmitting data.

As an example, in some embodiments, a UE 10 (Fig. 2) may receive an indication (e.g., explicit or implicit) characterizing QoS associated with data to be transmitted and may select one or more communication paths for transmitting the data based on QoS indication. In some embodiments, the UE may analyse the data to be transmitted and may e.g. select one or more communication paths for transmitting the data based on the analysis.

As a further example, an MEC device 30 may analyse QoS info associated with data to be transmitted by a UE, and the MEC device 30 may instruct a further device (e.g., gNB 20 and/or UE 10) to select one or more communication paths for transmitting the data based on the analysis by the MEC device 30.

In some embodiments, current standardization options for V2X can be enhanced by applying the principle according to the embodiments, thus e.g. flexibly using and/or switching between possible links, e.g. the network interface links (Uu), the direct device communication between devices (sidelink, PC5 interface), and the satellite communication link (NTN, which uses Uu interface).

In some embodiments, an application may specify which communication can be conducted with PC5 (the sidelink/direct device communication) and Uu interface. However, using the principle according to the embodiments enables to switch bearers (e.g., between the interfaces mentioned before) on lower layer, and/or to resume transmission, e.g. automatically, e.g. on another interface. In some embodiments, the principle according to the embodiments may also be used together with and/or for traffic steering (e.g., either by the network or automatically assisted by the UE or application (e.g., being exposed to parameters from lower layers)).

In some embodiments, the split bearer technique as defined by 3GPP 5G technology may be used, e.g. for connecting a UE to two (or more) nodes, e.g., using dual connectivity (DC) between two different interfaces/technologies, e.g., Uu LTE and Uu NR. In some embodiments, Dual Connectivity may achieve higher data rates by aggregating two carriers from two different base stations. In such a case, in some embodiments, a split occurs in a radio bearer, e.g. at the Packet Data Convergence Protocol (PDCP) layer. In this case, in some embodiments, data packets in the PDCP may be split between LTE and NR bearer, i.e., routing different parts of the packets to different radio bearers. In some embodiments, the data may be aggregated back in the UE, see Fig. 11 for more details.

In some embodiments, e.g. when using 5G New Radio, (as e.g. defined in 3GPP TS 37.340), data routed from higher layers may be mapped according to its QoS flows. In NR, these flows are called 5G QoS indicators (5QI) for all Uu link, defined in TS 23.501. Additionally, another complementing QoS indication, namely PC5 QoS indicator (PQI) defined in TS 23.287. In some embodiments, a relation between PQI and 5QI may be established, e.g. using the first information I-1 according to the embodiments.

In some embodiments, at least some of the following aspects and/or problems can at least temporarily and/or at least partly be addressed by the principle according to the embodiments:
Aspect 1:. How to select the right interface for an application (e.g., each application), packet from of an application, possible service requirements, QoS flow indication, etc.;
Aspect 2: Determine, whether a network load, network criteria, network option, etc., can/should be used;
Aspect 3: Determine, whether path switching can be used to to simultaneously (either at the same time or on two different time instances) to switch data between paths or relay data between paths;
Aspect 4: Determine whether QoS flow indication is to be used (e.g., as an implicit indication for path switching) to handle path switching or whether direct indication (e.g., explicit indication) is to be used (how to be done with minimum impact specs/implementation effort?).
Aspect 5: how functional safety requirement(s) may differentiate a path for a respective application? (involve the safety layer?)

## Claims

1. Method, for example computer-implemented method, of processing data associated with a communication system (1), comprising: determining (100) first information (I-1) characterizing one or more communication paths (PATH-1, PATH-2, ...) to be used by a device (10) for the communication system (1) for transmitting first data (DAT-1) based on at least one of: a) a service type (ST) associated with the first data (DAT-1), b) a quality of service (QoS), associated with the first data (DAT-1) and/or at least one communication path, c) a functional safety (FU-SA) associated with the first data (DAT-1), and, optional, using (102) the first information (I-1), wherein for example at least one of the one or more communication paths (PATH-1, PATH-2, ...) at least temporarily comprises a direct path.

2. The method according to claim 1, wherein the determining (100) of the first information (I-1) comprises: additionally determining (100a) the first information (I-1) based on at least one of: a) a load (COMM-SYS-LOAD) associated with the communication system (1), b) criteria (COMM-SYS-CRIT) associated with the communication system (1), c) a network option (NET-OPT).

3. The method according to any of the preceding claims, wherein the determining (100) of the first information (I-1) comprises receiving (100b) the first information (I-1), for example from at least one further entity.

4. The method according to any of the preceding claims, comprising at least one of: a) determining (110) whether path switching (PATH-SWITCHING) associated with the one or more communication paths (PATH-1, PATH-2, ...) is to be used, b) determining (112) whether relaying (RELAYING) of the first data (DAT-1) between the one or more communication paths (PATH-1, PATH-2, ...) is to be used, c) determining (114) whether at least one of the path switching (PATH-SWITCHING) and the relaying (RELAYING), for example a combination (COMB-SWIT-RELAY) of the path switching (PATH-SWITCHING) and the relaying (RELAYING), is to be used.

5. The method according to claim 4, wherein the determining (110) whether path switching (PATH-SWITCHING) associated with the one or more communication paths (PATH-1, PATH-2, ...) is to be used comprises determining (110a) whether to use multiple communication paths (PATH-1, PATH-2, ...) for transmitting the first data (DAT-1), for example simultaneously or at least partly temporally overlapping or in a temporally non-overlapping fashion, for example sequentially.

6. The method according to any of the preceding claims, comprising at least one of: a) using (120) an explicit indication (IND-EXPLICIT) for signaling that the first information (I-1) should be used, b) using (122) an implicit indication (IND-IMPLICIT) for signaling that the first information (I-1) should be used.

7. The method according to any of the preceding claims, comprising using (130) the first information (I-1) for at least one of: a) vehicle-to-network, V2N, communication (COMM-V2N), b) vehicle-to-everything, V2X, communication (COMM-V2X), c) non-terrestrial network, NTN,-based communication (COMM-NTN), d) vehicle-to-network-to-everything, V2N2X, communication (COMM-V2N2X), for example using (132) the first information (I-1) for path switching based on at least one of V2N communication (COMM-V2N), V2X communication (COMM-V2X), NTN-based communication (COMM-NTN), V2N2X communication (COMM-V2N2X).

8. The method according to any of the preceding claims, comprising processing (140) an indication (IND-I-1) associated with the first information (I-1), wherein the indication (IND-I-1) associated with the first information (I-1) characterizes at least one of the followings elements: a) whether only a first interface or communication path (PATH-1) should be used for data transmission, b) whether only a second interface or communication path (PATH-2) should be used for data transmission, c) whether more than one interface or communication path should be used for data transmission, wherein a first interface or communication path (PATH-1) is preferred, d) whether more than one interface or communication path should be used for data transmission, wherein a second interface or communication path (PATH-2) is preferred, e) whether more than one interface or communication path should be used for data transmission, wherein a first interface or communication path (PATH-1) and a second interface or communication path (PATH-1) are preferred, wherein for example the processing (140) comprises at least one of: A) generating (140a) the indication (IND-I-1) associated with the first information (I-1), B) providing (140b) the indication (IND-I-1) associated with the first information (I-1), C) instructing (140c), by using the indication (IND-I-1) associated with the first information (I-1), a further entity (10, 20) to use the first information (I-1), D) instructing (140d), by using the indication (IND-I-1) associated with the first information (I-1), a further entity (20) to instruct yet another entity (20) to use the first information (I-1).

9. The method according to any of the preceding claims, comprising mapping between one or more different requirements related to at least one of a) the service type (ST) associated with the first data (DAT-1), b) the quality of service (QoS) associated with the first data (DAT-1) and/or at least one communication path, c) the functional safety (FU-SA) associated with the first data (DAT-1), for example mapping between a 5G QoS indicator, 5QI, and a QoS indicator associated with a PC5 interface, PQI.

10. An apparatus (200; 200a; 200b; 200c) configured to perform the method according to any of the preceding claims.

11. A terminal device (10), for example user equipment, comprising the apparatus (200; 200a) according to claim 10.

12. A network device (20), for example base station, for example gNB, comprising the apparatus (200; 200b) according to claim 10.

13. A device (30) for a communication system (1), for example an edge computing device, for example a multi-access edge computing device, (MEC) comprising the apparatus (200; 200c) according to claim 10.

14. A communication system (1) comprising at least one apparatus (200; 200a; 200b; 200c) according to claim 10 and/or at least one terminal device (10) according to claim 11 and/or at least one network device (20) according to claim 12 and/or at least one device (30) according to claim 13.

15. A vehicle (50) comprising at least one terminal device (10) according to claim 11 and/or at least one apparatus (200; 200a; 200b; 200c) according to claim 10.

16. A computer program (PRG; PRG') comprising instructions which, when the program (PRG; PRG') is executed by a computer (202), cause the computer (202) to carry out the method according to at least one of the claims 1 to 9.

17. A computer-readable storage medium (SM) comprising instructions (PRG') which, when executed by a computer (202), cause the computer (202) to carry out the method according to at least one of the claims 1 to 9.

18. A data carrier signal (DCS) carrying and/or characterizing the computer program (PRG; PRG;) of claim 16.

19. A use (300) of the method according to any of the claims 1 to 9 and/or of the apparatus (200; 200a; 200b; 200c) of claim 10 and/or of the terminal device (10) of claim 11 and/or of the network device (20) of claim 12 and/or of the device (30) of claim 13 and/or of the communication system (1) of claim 14 and/or of the vehicle (50) of claim 15 and/or of the computer program (PRG; PRG') of claim 16 and/or of the computer-readable storage medium (SM) of claim 17 and/or of the data carrier signal (DCS) of claim 18 for at least one of: a) selecting (301) one or more communication paths for transmitting data, for example the first data (DAT-1), b) considering (302) a service type (ST) associated with the data and/or a quality of service (QoS) associated with the data and/or a functional safety (FU-SA) associated with the data and/or a network load and/or other network-relate criteria, c) performing (303) QoS-based and/or service-based path switching, e.g. for V2N2X communication, d) selecting (304) at least one interface or communication path for transmitting data, e.g. one or more data packets, associated with an application (APP), e) considering (305) functional safety requirements for selecting (304) at least one interface or communication path for transmitting data.
